# FASCICULE DE BREVET EUROPEEN

(11) **EP 3 918 185 B1**
(45) Date de publication et mention de la délivrance du brevet: **04.03.2026**
(21) Numéro de dépôt: 20705423.0
(22) Date de dépôt: 14.01.2020
(51) Int. Cl.: F01D 11/00, B22F 5/00, B22F 5/04, B23K 26/342, F01D 25/04, F01D 25/24

(54) **SECTEUR DE STATOR DE TURBOMACHINE A ZONES SOUMISES A DES CONTRAINTES ÉLEVÉES ASSOUPLIES**
TURBOMASCHINENSTATORABSCHNITT MIT HOHER BEANSPRUCHUNG AUSGESETZTEN FLEXIBLEN BEREICHEN
TURBOMACHINE STATOR SECTOR HAVING FLEXIBLE REGIONS SUBJECTED TO HIGH STRESS

(30) Priorité: 30.01.2019 FR 1900872
(43) Date de publication de la demande: 08.12.2021
(73) Titulaire: SAFRAN AIRCRAFT ENGINES, 75015 Paris (FR)
(72) Inventeur: DEZOUCHE, Laurent, Gilles, 77550 MOISSY-CRAMAYEL (FR); JOBEZ, Sophie, Martine, 77550 MOISSY-CRAMAYEL (FR); PREVOST, Julien, Marc, Antoine, 77550 MOISSY-CRAMAYEL (FR)
(74) Mandataire: Cabinet Beau de Loménie
(86) Numéro de dépôt international: PCT/FR2020/050047
(87) Numéro de publication internationale: WO 2020/157405

(56) Documents cités:
- EP-A1- 3 091 216
- EP-A1- 3 330 485
- EP-A2- 1 811 131
- US-A- 3 778 184
- US-A1- 2003 031 556
- US-A1- 2007 172 349
- US-B2- 9 533 485

## Description

### Arrière-plan de l'invention

La présente invention se rapporte au domaine général des redresseurs pour compresseur d'une turbomachine aéronautique telle qu'un turboréacteur ou un turbopropulseur d'avion.

Un compresseur de turbomachine se compose de plusieurs étages de compression formés chacun d'une rangée annulaire d'pales montées sur un arbre de rotor et d'un redresseur formé d'une pluralité de pales montées radialement sur un carter annulaire externe de la turbomachine.

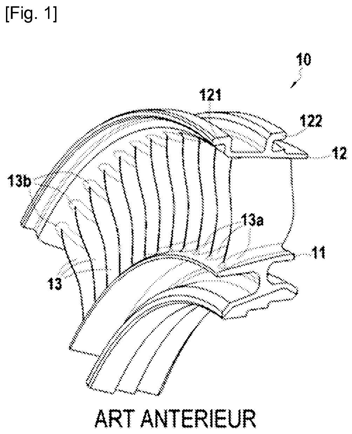

Un redresseur de compresseur est généralement sectorisé, c'est-à-dire qu'il est constitué de plusieurs secteurs angulaires mis bout à bout circonférentiellement autour de l'axe longitudinal du compresseur. Plus précisément, comme illustré sur la figure 1, chaque secteur de redresseur 10 comporte une virole interne 11 et une virole externe 12 disposées de manière coaxiale l'une à l'intérieur de l'autre, et plusieurs pales ou pales 13 s'étendant radialement entre les viroles et raccordées à celles-ci par leurs extrémités radiales respectivement 13a et 13b. Par ailleurs, à chacune de ses extrémités axiales, la virole externe 12 de chaque secteur de redresseur 10 comporte respectivement des pattes 121 et 122 en saillie pour le montage du secteur sur le carter externe de la turbomachine.

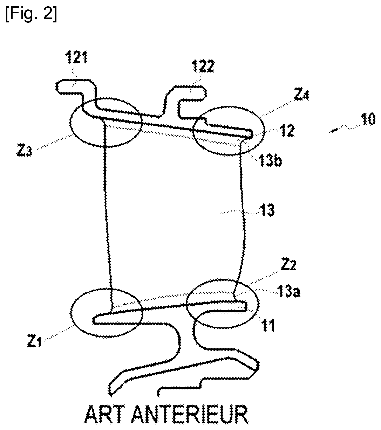

En fonctionnement, un tel secteur de redresseur est soumis à de nombreuses sollicitations mécaniques, aussi bien statiques que vibratoires. En particulier, de fortes réponses vibratoires sont observées sur les secteurs de redresseur, ces dernières pouvant entrainer dans le temps des endommagements du secteur (criques, ruptures, etc.). Ces sollicitations mécaniques sont essentiellement supportées au niveau des zones de jonctions entre les bords d'attaque et de fuite des pales et les viroles interne et externe correspondant aux zones Z₁, Z₂, Z₃ et Z₄ représentées sur la figure 2. En effet, ces zones de jonction correspondent à un changement de volume de matière brutale entre des parties massives et des parties fines dans le secteur. Cela induit une rigidité au niveau des zones de jonction qui deviennent alors des zones de fortes contraintes mécaniques pouvant conduire à des endommagements voire une destruction du secteur de redresseur.

Une solution pour réduire les contraintes mécaniques au niveau des jonctions entres les bords d'attaque et de fuites des pales et la virole externe d'un secteur de redresseur est décrite dans le document US2007172349. La solution évoquée dans ce document n'est toutefois pas pleinement satisfaisante. En particulier, au vibratoire, cette solution n'apporte pas suffisamment d'amortissement au niveau des zones de jonction entre les des bords d'attaque et de fuite des pales et les viroles interne et externe.

Les documents US3778184A et US9 533 485 B2 décrivent un secteur de stator de turbine avec une structure tridimensionnelle entre deux cloisons radiale d'une virole.

### Objet et résumé de l'invention

La présente invention a donc pour but principal de pallier de tels inconvénients en proposant un secteur de stator de turbomachine comprenant une pluralité d'pales s'étendant suivant une direction radiale entre une première extrémité et une deuxième extrémité et suivant une direction axiale entre un bord d'attaque et un bord de fuite, ledit secteur comprenant en outre une virole interne reliée à la première extrémité des pales et une virole externe reliée à la deuxième extrémité des pales, caractérisé en ce qu'il comprend au moins une portion annulaire formant tout ou partie de la virole interne ou de la virole externe, ladite au moins une portion annulaire comportant une première cloison présente au niveau de la jonction avec la première ou deuxième extrémité des pales et une deuxième cloison maintenue espacée de la première cloison suivant la direction radiale par une structure tridimensionnelle comportant une pluralité d'évidements, les pales de la pluralité de pales sont solidaires de la virole interne et de la virole externe, la ou les portions annulaires formant tout ou partie de la virole interne ou de la virole externe étant monobloc avec ladite virole interne ou ladite virole externe.

En apportant une souplesse supplémentaire, la portion annulaire permet d'améliorer significativement la tenue mécanique du secteur de stator au niveau des jonctions entre les extrémités des pales et les viroles interne et externe. Les contraintes statiques et dynamiques importantes sont ainsi mieux compensées et/ou absorbées dans ces zones de jonction où les contraintes sont importantes.

La ou les portions annulaires peuvent former tout ou partie de la virole interne ou de la virole externe suivant la direction axiale et/ou suivant la direction circonférentielle du secteurde stator de turbine.

Selon une caractéristique particulière du secteur de stator de l'invention, la première cloison présente une épaisseur inférieure à 1 mm. On confère ainsi une plus grande souplesse au niveau la jonction avec la première ou la deuxième extrémité des pales.

Selon une autre caractéristique particulière du secteur de stator de l'invention, la structure tridimensionnelle est constituée d'un réseau de croisillons ou d'alvéoles.

Selon une autre caractéristique particulière du secteur de stator de l'invention, l'extrémité aval de la virole externe est formée par une portion annulaire, la première cloison de la portion annulaire étant reliée à la deuxième extrémité des pales au niveau du bord de fuite desdites pales.

Selon une autre caractéristique particulière du secteur de stator de l'invention, la virole interne est entièrement formée par une portion annulaire, la première cloison de la portion annulaire étant reliée à la première extrémité des pales.

L'invention concerne également un stator de turbomachine, et notamment un redresseur de turbomachine, formé d'une pluralité de secteurs tels que définis précédemment, le stator ou redresseur faisant partie d'un compresseur de turbomachine.

L'invention concerne aussi une turbomachine équipée d'un compresseur selon l'invention.

L'invention a encore pour objet un procédé de fabrication d'un secteur de stator de turbomachine comprenant la réalisation d'une pluralité d'pales s'étendant suivant une direction radiale entre une première extrémité et une deuxième extrémité et suivant une direction axiale entre un bord d'attaque et un bord de fuite, d'une virole interne reliée à la première extrémité des pales et d'une virole externe reliée à la deuxième extrémité des pales, caractérisé en ce que le procédé comprend en outre la réalisation par fabrication additive d'au moins une portion annulaire sur tout ou partie d'au moins la virole interne ou la virole externe suivant la direction axiale, ladite au moins portion annulaire comprenant une première cloison présente au niveau de la jonction avec la première ou deuxième extrémité des pales, une deuxième cloison maintenue espacée de la première cloison suivant la direction radiale par une structure tridimensionnelle comportant une pluralité d'évidements, les pales de la pluralité de pales sont solidaires de la virole interne et de la virole externe, la ou les portions annulaires formant tout ou partie de la virole interne ou de la virole externe étant monobloc avec ladite virole interne ou ladite viroleexterne.

Selon une caractéristique particulière du procédé de l'invention, la première cloison présente une épaisseur inférieure à 1 mm.

Selon une autre caractéristique particulière du procédé de l'invention, la structure tridimensionnelle est constituée d'un réseau de croisillons ou d'alvéoles.

Selon une autre caractéristique particulière du procédé de l'invention, une portion annulaire est formée à l'extrémité aval de la virole externe, la première cloison de la portion annulaire étant reliée à la deuxième extrémité des pales au niveau du bord de fuite desdites pales.

Selon une autre caractéristique particulière du procédé de l'invention, une portion annulaire est formée sur toute la virole interne, la première cloison de la portion annulaire étant reliée à la première extrémité des pales.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une vue schématique en perspective d'un secteur de redresseur selon l'art antérieur ;
- la figure 2 est une vue de côté du secteur de redresseur de la figure 1 ;
- les figures 3 et 4 sont des vues schématiques en perspective d'un secteur de stator de turbine conformément à un mode de réalisation de l'invention ;
- la figure 5 est une vue de côté du secteur de redresseur de des figures 3 et 4 ;
- les figures 6 et 7 sont des vues schématiques en perspective d'un secteur de stator de turbine conformément à un autre mode de réalisation de l'invention ;
- la figure 8 est une vue de côté du secteur de redresseur de des figures 6 et 7.

### Description détaillée de modes de réalisation

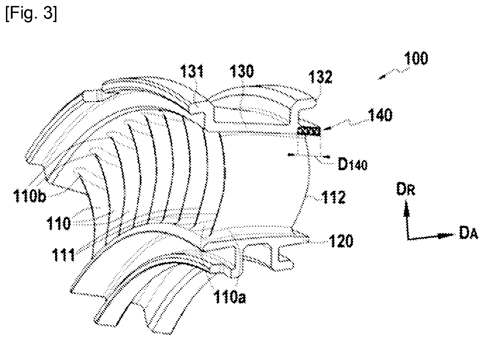

Les figures 3, 4 et 5 illustrent un secteur de stator de turbine 100 conformément à un mode de réalisation de l'invention. Le secteur de stator 100 qui est destiné ici à former une partie d'un redresseur haute pression dans une turbine comprend une pluralité de pales ou d'pales 110 s'étendant suivant une direction radiale D_{R} entre une première extrémité 110a et une deuxième extrémité 110b et suivant une direction axiale D_{A} entre un bord d'attaque 111 et un bord de fuite 112. Le secteur 100 comprend en outre une virole interne 120 relié à la première extrémité 110a des pales 110 et une virole externe 130 reliée à la deuxième extrémité 110b des pales 110. La virole externe 130 comporte des pattes 131 et 132 en saillie et décalées suivant la direction axiale D_{A} pour le montage du secteur sur un carter externe de turbine.

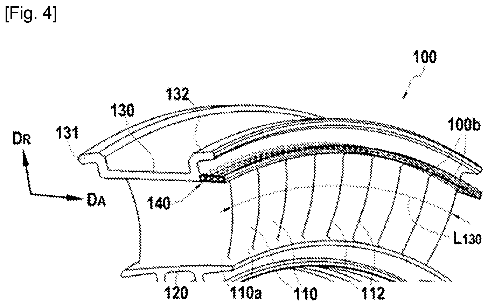

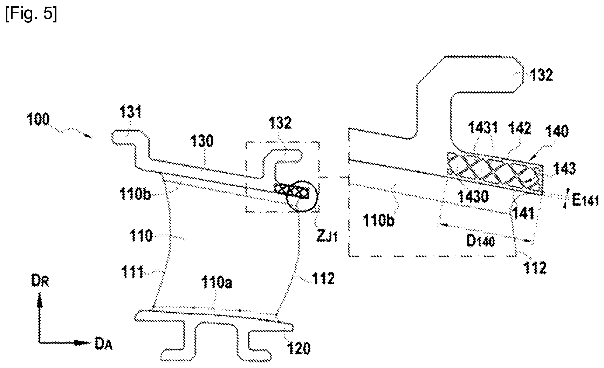

Conformément à l'invention, le secteur de stator 100 comprend une portion annulaire 140 formant ici le bord aval de la virole externe 130 suivant la direction axiale D_{A} situé au niveau de la jonction avec le bord de fuite 112 des pales 110. La portion annulaire 140 s'étend suivant la direction axiale D_{A} sur une largeur D₁₄₀ inférieure à la largeur totale de la virole externe 130 (figures 3 et 5) et sur toute la longueur circonférentielle L₁₃₀ de la virole externe 130 (figure 4). La portion annulaire 140 comporte une première cloison 141 présente au niveau de la jonction avec la deuxième extrémité 110b des pales 110 du côté du bord de fuite 112 et une deuxième cloison 142 maintenue espacée de la première cloison 141 suivant la direction radiale D_{R} par une structure tridimensionnelle 143 comportant une pluralité d'évidements 1430 (figure 5). Dans l'exemple décrit ici, la structure tridimensionnelle 142 est constituée d'un réseau de croisillons 1431 délimitant entre eux les évidements 1430. Par « maintenue espacée », on entend ici que la structure tridimensionnelle est en contact avec les première et deuxième cloisons et constitue l'élément qui relie ces deux cloisons en maintenant un espace entre elles.

La première cloison 141, qui est située au niveau de la zone de jonction Z_{J1} entre les bords de fuite 112 des pales 110 et la virole externe 130 (figure 5), présente une faible épaisseur E₁₄₁ afin d'apporter de la souplesse dans cette zone de contrainte. La première cloison 141 présente de préférence une épaisseur inférieure à 1 mm, plus préférentiellement une épaisseur d'environ 0,2 mm. Grâce à sa géométrie, la structure tridimensionnelle 143 apporte également une souplesse supplémentaire au niveau de zone de jonction Z_{J1}.

En apportant une souplesse supplémentaire, la portion 140 permet d'améliorer significativement la tenue mécanique du secteur de stator 100 au niveau de sa jonction entre les bords de fuite 112 des pales 110 et la virole externe 130. Les contraintes statiques et dynamiques importantes sont ainsi mieux compensées et/ou absorbées dans cette zone de jonction où les contraintes sont importantes.

Une portion annulaire (non représentée sur les figures 3 à 5) similaire à la portion annulaire 140 déjà décrite peut être également utilisée pour former le bord amont de la virole externe 130 suivant la direction axiale D_{A} situé au niveau de la jonction avec le bord d'attaque 111 des pales 110. En fonction des zones sensibles identifiées, la virole externe de chaque secteur de stator peut être munie d'une portion annulaire à son bord amont ou aval, ou de deux portions annulaires formant respectivement le bord amont et le bord aval de la virole externe.

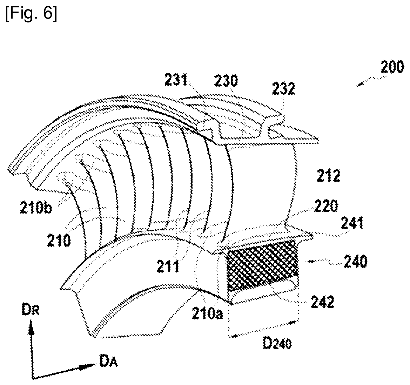

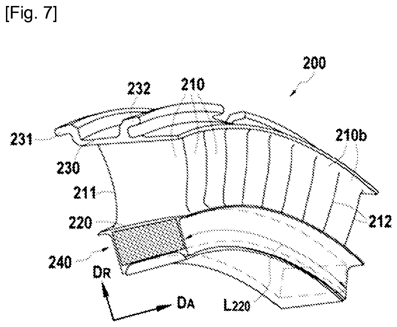

Les figures 6 à 8 illustrent un autre mode de réalisation d'un secteur de stator de l'invention qui diffère du secteur de stator 100 décrit ci-avant en ce qu'une portion annulaire d'assouplissement est présente sur la virole interne du secteur.

Plus précisément, le secteur de stator 200 qui est destiné ici à former une partie d'un redresseur haute pression dans une turbine comprend une pluralité de pales ou d'pales 210 s'étendant suivant une direction radiale D_{R} entre une première extrémité 210a et une deuxième extrémité 210b et suivant une direction axiale D_{A} entre un bord d'attaque 211 et un bord de fuite 212. Le secteur 200 comprend en outre une virole interne 220 relié à la première extrémité 210a des pales 210 et une virole externe 230 reliée à la deuxième extrémité 210b des pales 210. La virole externe 230 comporte des pattes 231 et 232 en saillie et décalées suivant la direction axiale D_{A} pour le montage du secteur sur un carter externe de turbine.

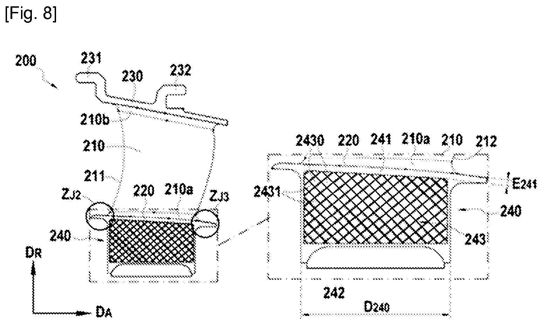

Conformément à l'invention, le secteur de stator 200 comprend une portion annulaire 240 formant ici toute la virole interne 220. La portion annulaire 240 s'étend suivant la direction axiale D_{A} sur une largeur D₂₄₀ correspondant à la largeur totale de la virole interne 230 (figures 6 et 8) et sur toute la longueur circonférentielle L₂₂₀ de la virole interne 220 (figure 4). La portion annulaire 240 comporte une première cloison 241 présente au niveau de la jonction avec la deuxième extrémité 210b des pales 210 et une deuxième cloison 242 maintenue espacée de la première cloison 241 suivant la direction radiale D_{R} par une structure tridimensionnelle 243 comportant une pluralité d'évidements 2430 (figure 8). Dans l'exemple décrit ici, la structure tridimensionnelle 242 est constituée d'un réseau de croisillons 2431 délimitant entre eux les évidements 2430.

La première cloison 241, qui est située à la fois au niveau de la zone de jonction Z_{J2} entre les bords d'attaque 211 des pales 210 et la virole interne 220 et au niveau de la zone de jonction Z_{J3} entre les bords de fuite 212 des pales 210 et la virole interne 220 (figure 8), présente une faible épaisseur E₂₄₁ afin d'apporter de la souplesse dans ces zones de contrainte. La première cloison 241 présente de préférence une épaisseur inférieure à 1 mm, plus préférentiellement une épaisseur d'environ 0,2 mm. Grâce à sa géométrie, la structure tridimensionnelle 243 apporte également une souplesse supplémentaire au niveau des zones de jonction Z_{J2} et Z_{J3}.

En apportant une souplesse supplémentaire, la portion 240 permet d'améliorer significativement la tenue mécanique du secteur de stator 200 au niveau de sa jonction entre les bords d'attaque 211 et de fuite 212 des pales 110, d'une part, et la virole interne 220, d'autre part. Les contraintes statiques et dynamiques importantes sont ainsi mieux compensées et/ou absorbées dans ces zones de jonction où les contraintes sont importantes.

Par ailleurs, en outre d'une virole interne formée par une portion annulaire comme la portion 204 et en fonction des zones sensibles identifiées, la virole externe de chaque secteur de stator peut être munie d'une portion annulaire similaire à la portion annulaire 140 décrite précédemment à son bord amont ou aval, ou de deux portions annulaires formant respectivement le bord amont et le bord aval de la virole externe.

La ou les portions annulaires de l'invention peuvent former tout ou partie de la virole interne ou de la virole externe suivant la direction axiale et/ou suivant la direction circonférentielle d'un secteur de stator.

La ou les portions annulaires de l'invention sont réalisées par fabrication additive. En effet, la réalisation de cloisons ayant une épaisseur inférieure à 1 mm au niveau des jonctions avec les bords d'attaque et/ou de fuite des pales comme les cloisons 141 et 241 décrites ci-avant par les techniques classiques d'usinage s'avère difficile à maîtriser. En effet, en raison des tolérances de fabrication liées à l'usinage, l'épaisseur de ces cloisons peut être au final trop importante pour conférer la souplesse nécessaire dans les zones concernées ou alors trop fine pour assurer une bonne résistance mécanique (déformation, plastification, etc.) du secteur. La fabrication additive offre une plus grande précision dimensionnelle qui permet un bon contrôle de l'épaisseur des cloisons sur l'ensemble des portions annulaires. La fabrication additive peut être utilisée pour réaliser seulement les portions annulaires sur les autres parties d'un secteur de stator qui sont réalisées avec les techniques conventionnelles telles que l'usinage ou pour réaliser l'ensemble du secteur de stator. Pour la fabrication additive, on peut notamment utiliser le procédé de fabrication additive par fusion laser sur lit de poudre.

Par ailleurs, dans les exemples décrits ci-avant, la structure tridimensionnelle des portions annulaires est constituée d'un réseau de croisillons. Toutefois, la structure tridimensionnelle peut présenter d'autres géométries que des croisillons. Toute géométrie tridimensionnelle permettant d'apporter de la souplesse mécanique peut être envisagée. Par exemple, la structure dimensionnelle peut présenter un réseau d'alvéoles à la place d'un réseau de croisillons.

En outre d'apporter une souplesse supplémentaire, la structure tridimensionnelle permet grâce à son réseau d'évidements de réduire avantageusement les gradients de contraintes créés entre la ou les portions annulaires et les pales lors de la construction de la pièce en fabrication additive. En effet, bien qu'atténués par le traitement thermique, les gradients induits par la proximité de parties fines avec des parties massives, sont néfastes pour la tenue mécanique de la pièce car ils sont situés dans des zones à plus forte sollicitation.

Dans la présente invention, le secteur d'anneau est réalisé en une seule pièce, ce qui signifie que tous les éléments constitutifs d'un secteur de stator selon l'invention sont solidaires. En d'autres termes, le secteur stator selon l'invention comprend des pales solidaires d'une virole interne et d'une virole externe, la ou les portions annulaires formant tout ou partie de la virole interne et/ou de la virole externe étant monobloc avec la virole concernée.

## Revendications

1. Secteur de stator de turbomachine (100) comprenant une pluralité de pales (110) s'étendant suivant une direction radiale (D_{R}) entre une première extrémité (110a) et une deuxième extrémité (110b) et suivant une direction axiale (D_{A}) entre un bord d'attaque (111) et un bord de fuite (112), ledit secteur comprenant en outre une virole interne (120) reliée à la première extrémité (110a) des pales et une virole externe (130) reliée à la deuxième extrémité (110b) des pales, ledit secteur comprenant au moins une portion annulaire (140) formant tout ou partie de la virole interne ou de la virole externe, ladite au moins une portion annulaire comportant une première cloison (141) présente au niveau de la jonction avec la première (110a) ou deuxième extrémité (110b) des pales (110) et une deuxième cloison (142) maintenue espacée de la première cloison suivant la direction radiale (D_{R}) par une structure tridimensionnelle (143) comportant une pluralité d'évidements (1430),
**caractérisé en ce que** les pales de la pluralité de pales (110) sont solidaires de la virole interne (120) et de la virole externe (130), la ou les portions annulaires (140) formant tout ou partie de la virole interne ou de la virole externe étant monobloc avec ladite virole interne ou ladite virole externe.

2. Secteur de stator selon la revendication 1, dans lequel la première cloison (141) présente une épaisseur (E₁₄₁) inférieure à 1 mm.

3. Secteur de stator selon la revendication 1 ou 2, dans lequel la structure tridimensionnelle (143) est constituée d'un réseau de croisillons ou d'alvéoles.

4. Secteur selon l'une quelconque des revendications 1 à 3, dans lequel l'extrémité aval de la virole externe (130) est formée par une portion annulaire (140), la première cloison (141) de la portion annulaire étant reliée à la deuxième extrémité (110b) des pales (110) au niveau du bord de fuite (111) desdites pales.

5. Secteur selon l'une quelconque des revendications 1 à 3, dans lequel la virole interne (220) est entièrement formée par une portion annulaire (240), la première cloison (241) de la portion annulaire étant reliée à la première extrémité (210a) des pales (210).

6. Stator de turbomachine comprenant une pluralité de secteurs selon l'une quelconque des revendications 1 à 5.

7. Compresseur de turbomachine équipé d'un stator selon la revendication 6.

8. Turbomachine équipée d'un compresseur selon la revendication 7.

9. Procédé de fabrication d'un secteur de stator de turbomachine (100) comprenant la réalisation d'une pluralité de pales (110) s'étendant suivant une direction radiale (D_{R}) entre une première extrémité (110a) et une deuxième extrémité (110b) et suivant une direction axiale (D_{A}) entre un bord d'attaque (111) et un bord de fuite (112), d'une virole interne (120) reliée à la première extrémité (110a) des pales et d'une virole externe (130) reliée à la deuxième extrémité (110b) des pales, le procédé comprenant en outre la réalisation par fabrication additive d'au moins une portion annulaire (140) sur tout ou partie d'au moins la virole interne (120) ou la virole externe (130) suivant la direction axiale (D_{A}), ladite au moins une portion annulaire (140) comprenant une première cloison (141) présente au niveau de la jonction avec la première (110a) ou deuxième extrémité (110b) des pales, une deuxième cloison (142) maintenue espacée de la première cloison (141) suivant la direction radiale (D_{R}) par une structure tridimensionnelle (143) comportant une pluralité d'évidements (1430)
**caractérisé en ce que** les pales de la pluralité de pales (110) sont solidaires de la virole interne (120) et de la virole externe (130), la ou les portions annulaires (140) formant tout ou partie de la virole interne ou de la virole externe étant monobloc avec ladite virole interne ou ladite virole externe.

10. Procédé selon la revendication 9, dans lequel la première cloison (141) présente une épaisseur (E₁₄₁) inférieure à 1 mm.

11. Procédé selon la revendication 9 ou 10, dans lequel la structure tridimensionnelle (143) est constituée d'un réseau de croisillons ou d'alvéoles.

12. Procédé selon l'une quelconque des revendications 9 à 11, dans lequel une portion annulaire (140) est formée à l'extrémité aval de la virole externe (130), la première cloison (141) de la portion annulaire étant reliée à la deuxième extrémité (110b) des pales (110) au niveau du bord de fuite (112) desdites pales.

13. Procédé selon l'une quelconque des revendications 9 à 12, dans lequel une portion annulaire (240) est formée sur toute la virole interne (230), la première cloison (241) de la portion annulaire étant reliée à la première extrémité (210a) des pales (210).

## Patentansprüche

1. Turbomaschinenstatorsektor (100), der mehrere Blätter (110) umfasst, die sich entlang einer radialen Richtung (D_{R}) zwischen einem ersten Ende (110a) und einem zweiten Ende (110b) und entlang einer axialen Richtung (D_{A}) zwischen einer Vorderkante (11) und einer Hinterkante (112) erstrecken, wobei der Sektor ferner einen inneren Ring (120), der mit dem ersten Ende (110a) der Blätter verbunden ist, und einen äußeren Ring (130) umfasst, der mit dem zweiten Ende (110b) der Blätter verbunden ist, wobei der Sektor mindestens einen ringförmigen Abschnitt (140) umfasst, der eine Gesamtheit oder einen Teil des inneren Rings oder des äußeren Rings bildet, wobei der mindestens eine ringförmige Abschnitt eine erste Wand (141), die im Bereich der Verbindung mit dem ersten (110a) oder dem zweiten Ende (110b) der Blätter (110) vorhanden ist, und eine zweite Wand (142) umfasst, die von einer dreidimensionalen Struktur (143), die mehrere Aussparungen (1430) umfasst, von der ersten Wand entlang der radialen Richtung (D_{R}) beabstandet gehalten wird, **dadurch gekennzeichnet, dass** die Blätter der mehreren Blätter (110) fest mit dem inneren Ring (120) und dem äußeren Ring (130) verbunden sind, wobei der oder die ringförmigen Abschnitte (140) eine Gesamtheit oder einen Teil des inneren Rings oder des äußeren Rings bildet bzw. bilden, indem er bzw. sie einteilig mit dem inneren Ring oder dem äußeren Ring ist bzw. sind.

2. Statorsektor nach Anspruch 1, wobei die erste Wand (141) eine Dicke (E₁₄₁) kleiner als 1 mm aufweist.

3. Statorsektor nach Anspruch 1 oder 2, wobei die dreidimensionale Struktur (143) aus einem Netz von Kreuzstücken oder Zellen besteht.

4. Stator nach einem der Ansprüche 1 bis 3, wobei das stromabwärtige Ende des äußeren Rings (130) aus einem ringförmigen Abschnitt (140) gebildet ist und die erste Wand (141) des ringförmigen Abschnitts mit dem zweiten Ende (110b) der Blätter (110) im Bereich der Hinterkante (111) der Blätter verbunden ist.

5. Sektor nach einem der Ansprüche 1 bis 3, wobei der innere Ring (220) vollständig aus einem ringförmigen Abschnitt (240) gebildet ist, wobei die erste Wand (241) des ringförmigen Abschnitts mit dem ersten Ende (210a) der Blätter (210) verbunden ist.

6. Turbomaschinenstator, der mehrere Sektoren nach einem der Ansprüche 1 bis 5 umfasst.

7. Turbomaschinenverdichter, der mit einem Stator nach Anspruch 6 ausgerüstet ist.

8. Turbomaschine, die mit einem Verdichter nach Anspruch 7 ausgerüstet ist.

9. Verfahren zur Herstellung eines Turbomaschinenstatorsektors (100), das die Ausführung einer Vielzahl von Blättern (110), die sich entlang einer radialen Richtung (D_{R}) zwischen einem ersten Ende (110a) und einem zweiten Ende (110b) und entlang einer axialen Richtung (D_{A}) zwischen einer Vorderkante (111) und einer Hinterkante (112) erstrecken, eines inneren Rings (120), der mit dem ersten Ende (110a) der Blätter verbunden ist, und eines äußeren Rings (130) umfasst, der mit dem zweiten Ende (110b) der Blätter verbunden ist, wobei das Verfahren ferner die Ausführung, durch additive Fertigung, mindestens eines ringförmigen Abschnitts (140) auf einer Gesamtheit oder auf einem Teil mindestens des inneren Rings (120) oder des äußeren Rings (130) entlang der axialen Richtung (D_{A}) umfasst, wobei der mindestens eine ringförmige Abschnitt (140) eine erste Wand (141), die im Bereich der Verbindung mit dem ersten (110a) oder dem zweiten Ende (110b) der Blätter vorhanden ist, und eine zweite Wand (142) umfasst, die von einer dreidimensionalen Struktur (143), die mehrere Aussparungen (1430) umfasst, entlang der radialen Richtung (D_{R}) von der ersten Wand (141) beabstandet gehalten wird,
**dadurch gekennzeichnet, dass** die Blätter der mehreren Blätter (110) fest mit dem inneren Ring (120) und dem äußeren Ring (130) verbunden sind, wobei der oder die ringförmigen Abschnitte (140) eine Gesamtheit oder einen Teil des inneren Rings oder des äußeren Rings bildet bzw. bilden, indem er bzw. sie einteilig mit dem inneren Ring oder dem äußeren Ring ist bzw. sind.

10. Verfahren nach Anspruch 9, wobei die erste Wand (141) eine Dicke (E₁₄₁) kleiner als 1 mm aufweist.

11. Verfahren nach Anspruch 9 oder 10, wobei die dreidimensionale Struktur (143) aus einem Netz von Kreuzstücken oder Zellen besteht.

12. Verfahren nach einem der Ansprüche 9 bis 11, wobei der ringförmige Abschnitt (140) am stromabwärtigen Ende des äußeren Rings (130) gebildet wird und die erste Wand (141) des ringförmigen Abschnitts mit dem zweiten Ende (110b) der Blätter (110) im Bereich der Hinterkante (112) der Blätter verbunden ist.

13. Verfahren nach einem der Ansprüche 9 bis 12, wobei ein ringförmiger Abschnitt (240) auf dem gesamten inneren Ring (230) gebildet wird, wobei die erste Wand (241) des ringförmigen Abschnitts mit dem ersten Ende (210a) der Blätter (210) verbunden ist.

## Claims

1. A turbine stator sector (100) comprising a plurality of vanes (110) extending along a radial direction (D_{R}) between a first end (110a) and a second end (110b) and along an axial direction (D_{A}) between a leading edge (111) and a trailing edge (112), said sector further comprising an internal shroud (120) linked to the first end (110a) of the vanes and an external shroud (130) linked to the second end (110b) of the vanes, said sector comprising at least one annular portion (140) forming all or part of the internal shroud or of the external shroud, said at least one annular portion comprising a first partition (141) present at the junction with the first (110a) or second end (110b) of the vanes (110) and a second partition (142) held spaced from the first partition along the radial direction (D_{R}) by a three-dimensional structure (143) including a plurality of cutouts (1430),
**characterized in that** the vanes of the plurality of vanes (110) are integral to the internal shroud (120) and to the external shroud (130), the annular(s) portion(s) (140) forming all or part of the internal shroud or of the external shroud being monobloc with said internal shroud or said external shroud.

2. The stator sector according to claim 1, wherein the first partition (141) has a thickness (E₁₄₁) of less than 1 mm.

3. The stator sector according to claim 1 or 2, wherein the three-dimensional structure (143) consists of an array of crosspieces or of cavities.

4. The sector according to any one of claims 1 to 3, wherein the downstream end of the external shroud (130) is formed by an annular portion (140), the first partition (141) of the annular portion being linked to the second end (110b) of the vanes (110) at the trailing edge (111) of said vanes.

5. The sector according to any one of claims 1 to 3, wherein the internal shroud (220) is entirely formed by an annular portion (240), the first partition (241) of the annular portion being linked to the first end (210a) of the vanes (210).

6. A turbomachine stator comprising a plurality of sectors according to any one of claims 1 to 5.

7. A turbomachine compressor equipped with a stator according to claim 6.

8. A turbomachine equipped with a compressor according to claim 7.

9. A method for manufacturing a turbomachine stator sector (100) comprising the production of a plurality of vanes (110) extending along a radial direction (D_{R}) between a first end (110a) and a second end (110b) and along an axial direction (D_{A}) between a leading edge (111) and a trailing edge (112), of an internal shroud (120) linked to the first end (110a) of the vanes and of an external shroud (130) linked to a second end (110b) of the vanes, the method further comprising the production by additive manufacturing of at least one annular portion (140) over all or part of at least the internal shroud (120) or the external shroud (130) along the axial direction (D_{A}), said at least one annular portion (140) comprising a first partition (141) present at the junction with the first (110a) or second end (110b) of the vanes, a second partition (142) held spaced from the first partition (141) along the radial direction (D_{R}) by a three-dimensional structure (143) including a plurality of cutouts (1430),
**characterized in that** the vanes of the plurality of vanes (110) are integral to the internal shroud (120) and to the external shroud (130), the annular(s) portion(s) (140) forming all or part of the internal shroud or of the external shroud being monobloc with said internal shroud or said external shroud.

10. The method according to claim 9, wherein the first partition (141) has a thickness (E₁₄₁) of less than 1 mm.

11. The method according to claim 9 or 10, wherein the three-dimensional structure (143) consists of an array of crosspieces or of cavities.

12. The method according to any one of claims 9 to 11, wherein an annular portion (140) is formed at the downstream end of the external shroud (130), the first partition (141) of the annular portion being linked to the second end (110b) of the vanes (110) at the trailing edge (112) of said vanes.

13. The method according to any one of claims 9 to 12, wherein an annular portion (240) is formed over the entire internal shroud (230), the first partition (241) of the annular portion being linked to the first end (210a) of the vanes (210).
